# EUROPÄISCHE PATENTANMELDUNG

(11) **EP 1 313 337 A1**
(43) Veröffentlichungstag der Anmeldung: **21.05.2003**
(21) Anmeldenummer: 01127170.7
(22) Anmeldetag: 15.11.2001
(51) Int. Cl.: H04Q 7/36

(54) **Verfahren zur Übertragung von Informationen in einem zellularen Funkkommunikationssystem mit Funksektoren**

(71) Anmelder: SIEMENS AKTIENGESELLSCHAFT, 80333 München (DE)
(72) Erfinder: Dillinger, Markus, 81737 Muenchen (DE); Luo, Jijuno, 81549 Muenchen (DE)

(57) **Zusammenfassung**

Die Erfindung betrifft ein Verfahren zur Übertragung von Informationen in einem zellularen Funkkommunikationssystem für mehrere Teilnehmerstationen, wobei jede Funkzelle (1, 2, 3, 4, 5, 6, 7) des Funkkommunikationssystems eine Basisstation (NB1, NB2, NB3, NB4, NB5, NB6, NB7) umfasst, über welche die Informationen über Rundruf und/oder Punkt-zu-Mehrpunkt-Verbindungen zu Teilnehmerstationen übertragen werden. Erfindungsgemäß sind mindestens zwei Funkzellen (1, 2, 3, 4, 5, 6, 7) des zellularen Funkkommunikationssystems in jeweils n Funksektoren (SXa, SXb, SXc mit X = 1 bis 7) mit n ≥ 2 aufgeteilt und die Informationen werden in den jeweils n Funksektoren einer Funkzelle zeitlich versetzt übertragen. Die Erfindung dient der Verbesserung der Interferenzsituation. Mit Vorteil werden in n Funksektoren die Informationen ohne zeitliche Überlappung übertragen. Mit besonderem Vorteil können Funksektoren jeweils zu einer Gruppe zusammengefasst werden, welche wechselseitig die geringsten Kopplungsfaktoren hinsichtlich der Funkübertragung aufweisen, und die Übertragung der Informationen erfolgt für jede Gruppe zeitlich differenziert.

## Beschreibung

Die Erfindung betrifft ein Verfahren zur Übertragung von Informationen in einem zellularen Funkkommunikationssystem für mehrere Teilnehmerstationen nach dem Oberbegriff des Anspruchs 1.

Die Erfindung betrifft ferner ein Funkkommunikationssystem mit Mitteln zur Durchführung des genannten Verfahrens.

In Funkkommunikationssystemen werden Informationen (beispielsweise Sprache, Bildinformation oder andere Daten) mit Hilfe von elektromagnetischen Wellen über eine Funkschnittstelle zwischen einer Basisstation und einer Teilnehmerstation (Mobilstation oder Terminal) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit TD/CDMA-Übertragungsverfahren bzw. FD/CDMA-Übertragungsverfahren über die Funkschnittstelle, wie beispielsweise das UMTS (Universal Mobile Telecommunication System) oder andere Systeme der dritten Generation sind Frequenzen im Frequenzband von ca. 2000 MHz vorgesehen.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downiink) genutzt wird, während der FDD-Modus für die beiden Übertragungsrichtungen jeweils ein unterschiedliches Frequenzband nutzt.

Die innerhalb des Funkkommunikationssystems zu übertragende Information kann über verschiedene Verbindungen übertragen werden. Informationen, die individuell für eine Teilnehmerstation bestimmt sind, werden über Punkt-zu-Punkt-Verbindungen über dezidierte Kanäle übertragen. Informationen, die für alle Teilnehmer (Broadcast-Informationen) oder für eine bestimmte Klasse von Teilnehmern (Multicast-Informationen) in einer Funkzelle vorgesehen sind, werden über Rundruf oder Punkt-zu-Mehrpunkt-Verbindungen übertragen. Jede Funkzelle des Funkkommunikationssystems umfasst eine Basisstation, über welche die Informationen in Abwärtsrichtung (Downlink) zu Teilnehmerstationen übertragen werden. Neben diesen Informationsübertragungen in Abwärtsrichtung (Downlink) finden zusätzlich auch Übertragungen in Aufwärtsrichtung (Uplink) von Teilnehmerstationen zu den Basisstationen statt.

Die Basisstation kann die Informationen über Sektorenantennen abstrahlen. Die Funkzelle ist dann entsprechend den Sektorantennen in einzelne Funksektoren eingeteilt.

Die Übertragung von Informationen für mehrere Teilnehmer über Broadcast-Kanäle ist im Gegensatz zur Übertragung von Informationen über Punkt-zu-Punkt-Verbindungen über dezidierte Kanäle nicht leistungsgeregelt. Insbesondere auf Grund dieser Tatsache kommt es zu einer deutlichen Verschlechterung der Interferenzsituation beim regulären Verkehr, wenn zusätzlich zu den Übertragungen über Punkt-zu-Punkt-Verbindungen auch nicht leistungsgeregelt Informationen für mehrere Teilnehmerstationen übertragen wird.

Der vorliegenden Erfindung liegt die Aufgabe zu Grunde, ein Verfahren und ein Funkkommunikationssystem der eingangs bezeichneten Art aufzuzeigen, welche eine positive Beeinflussung der Interferenzsituation gewährleisten. Dabei soll insbesondere auf eine Organisation der Übertragung nicht leistungsgeregelt Informationen für mehrere Teilnehmer zurückgegriffen werden.

Diese Aufgabe wird für dieses Verfahren durch die Merkmale des Anspruchs 1 gelöst.

Vorteilhafte Ausgestaltungen und Weiterbildungen der Erfindung sind Gegenstand der abhängigen Ansprüche.

Erfindungsgemäß sind mindestens zwei Funkzellen des zellularen Funkkommunikationssystems in jeweils n Funksektoren aufgeteilt, wobei n für die Anzahl der Funksektoren mit einem Wert von mindestens 2 steht. Die Informationen werden in den jeweils n Funksektoren einer Funkzelle zeitlich versetzt übertragen.

Insbesondere können in den jeweils n Funksektoren einer Funkzelle die Informationen ohne zeitliche Überlappung, vorzugsweise in unmittelbar zusammenhängenden Zeitphasen, übertragen werden.

Dies bedeutet, dass die Übertragung der Informationen für alle n Funksektoren einer Funkzelle zumindest n mal der für die Übertragung in einem Funksektor benötigten Zeit in Anspruch nimmt. Werden die Informationen ohne zeitliche Überlappung in unmittelbar zusammenhängenden Zeitphasen übertragen, ergibt sich eine insgesamt benötigte Übertragungszeit pro Funkzelle von n Zeitphasen.

Die zeitlich differenzierte Übertragung der Informationen trägt merklich zu einer Verbesserung der Interferenzsituation bei. Eine besonders effektive Maßnahme zur Verbesserung der Interferenzsituation besteht darin, dass die Funksektoren der mindestens zwei Funkzellen jeweils zu einer Gruppe zusammengefasst werden, welche wechselseitig die geringsten Kopplungsfaktoren hinsichtlich der Funkübertragung aufweisen, und dass für jede Gruppe die zeitlich differenzierte Übertragung der Informationen erfolgt.

In Ausgestaltung der Erfindung wird die Gruppierung bezüglich der wechselseitig geringsten Kopplungsfaktoren zumindest in einem Bereich des Funkkommunikationssystems durchgeführt. Derartige Bereiche des Funkkommunikationssystems können so gewählt werden, dass sie sich an der infrastrukturellen Situation des Funkkommunikationssystems orientieren. So können beispielsweise diejenigen Funksektoren zu einer Gruppe zusammengefasst werden, deren Basisstationen einem Basisstations-Kontroller zugeordnet sind.

In Weiterbildung der Erfindung kann die Gruppierung bezüglich der wechselseitigen geringsten Kopplungsfaktoren im wesentlichen einer Gruppierung nach der Ausrichtung der Sendesignale von den Basisstationen zur Übertragung der Informationen entsprechen. Die Ausrichtung der Sendesignale von den Basisstationen kann dabei insbesondere in räumlicher Hinsicht und/oder im Hinblick auf die Polarisation der Sendesignale betrachtet werden.

Die Informationen für mehrere Teilnehmer können Software, insbesondere für ein Download eines Versionsabgleichs (Upgrade) umfassen, welcher zeitlich verhältnismäßig langwierig ausfallen kann. Insbesondere kann mit dem vorgeschlagenen Verfahren ein pauschaler Versionsabgleich durchgeführt werden. Durch die Anwendung der Erfindung wird dabei die Interferenz auf den regulären Verkehr innerhalb der Zelle klein gehalten.

Als Teilnehmerstation können bspw. Mobilstationen oder Terminals Verwendung finden. Mit Hilfe eines Downloads von Netz-Software (core software) können beispielsweise die Teilnehmerstationen rekonfiguriert werden. Die Art des Downloads kann dabei variieren von einfachen Parametern, vorzugsweise für Anwendungen oder Dienste, bis zu sofort ausführbaren Programmcodes. Die heruntergeladene Software kann in verschiedenen Formaten empfangen werden, beispielsweise als Hardware-spezifizierte binäre Codes, als Software in Hochsprache (High-Level-Software), die noch interpretiert werden muss, als Objekt-Software (software objects)oder als Softwareagenten (software agents).

In Ausgestaltung der Erfindung kann als Anzahl der Funksektoren insbesondere n=2, n=3, n=4 oder n=6 gewählt werden. Eine solche Anzahl von Funksektoren führt auf der einen Seite durch Anwendung der Erfindung zu einer deutlichen Verringerung der auftretenden Interferenz, auf der anderen Seite ist die Organisation der Übertragung der Informationen noch mit verhältnismäßig geringem Aufwand zu bewerkstelligen.

Auf Grund der Tatsache, dass die Broadcast-Kanäle nicht leistungsgeregelt sind, ist in der Regel sichergestellt, dass die Teilnehmerstationen die Informationen empfangen können. Im Falle, dass die zu übertragende Informationen nicht komplett von einer Teilnehmerstation empfangen wird, können die Restinformationen in Weiterbildung der Erfindung über einen dezidierten Kanal zu dieser Teilnehmerstation übertragen werden. Eine solche Situation kann beispielsweise auftreten, wenn sich eine Mobilstation auf Grund ihrer Mobilität beim Empfang der Informationen aus dem Funksektor bewegt. Wird also wie im beschriebenen Fall die übertragende Information auf Grund der Mobilität der Teilnehmerstation nicht komplett von der Teilnehmerstation empfangen, beispielsweise bei einem Handover in einem anderen Funksektor derselben oder einer anderen Funkzelle, werden die noch zu übertragenden Restinformationen über einen dezidierten Kanal zu dieser Teilnehmerstation übertragen. Es kommen auch andere Gründe für die unvollständige Übertragung wie etwa Störungen in Betracht.

Die Erfindung kann insbesondere für die Übertragung mit einem CDMA-Vielfachzugriffsverfahrens (Code Division Multiple Access) angewendet werden. Die Erfindung führt nämlich insbesondere in Funkkommunikationssystemen zu einer merklichen Verbesserung der Frequenzsituation, bei denen in Nachbarzellen identische Frequenzen benutzt werden. Dies trifft auf Funkkommunikationssysteme mit Anwendung des CDMA-Vielfachzugriffsverfahrens zu. Die Erhöhung der Sendeleistung in einer Zelle macht eine Erhöhung der Sendeleistung in der Nachbarzelle notwendig, wenn ein bestimmtes Signal-zu-Interferenz-Verhältnis (SIR Signal To Interference) für Dienste aufrechterhalten werden soll.

Aber auch für Funkkommunikationssysteme mit einem Frequenz-Wiederverwendungs-Faktor (Frequency Reuse Factor) größer als 1 bringt die Erfindung eine Verbesserung der Interferenzsituation.

Die Übertragung der Informationen ist im Rahmen der vorliegenden Erfindung nicht auf die gleichzeitige Informationsübertragung in benachbarten Zellen beschränkt, sondern umfasst vielmehr auch die gleichzeitige Informationsübertragung in nicht benachbarte Zellen.

Das zellulare Funkkommunikationssystem muss zur Umsetzung der Erfindung mit Mitteln zur Durchführung des erfindungsgemäßen Verfahrens ausgestattet sein. Diese Mittel umfassen erfindungsgemäß einen Netzwerk-Kontroller zur Steuerung der Übertragung der Informationen für mehrere Teilnehmerstationen.

Einzelheiten und Ausgestaltungen der Erfindung sollen im Folgenden anhand eines Ausführungsbeispiels näher erläutert werden.

Hierbei zeigt:

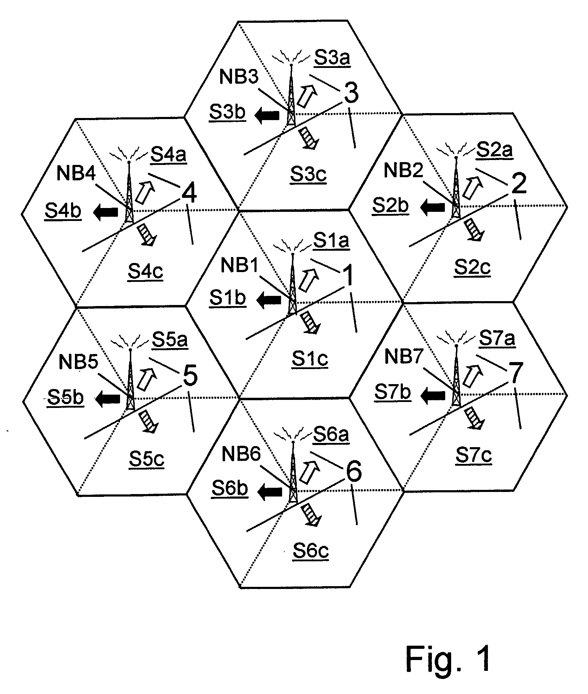

- Fig. 1:: eine schematische Darstellung eines Bereichs eines Funkkommunikationssystems mit einer Vielzahl von in drei Gruppen eingeteilten Funksektoren.

Das in Fig. 1 dargestellte Schema zeigt einen Bereich eines Funkkommunikationssystems der aus 7 Funkzellen 1-7 mit jeweils 3 Funksektoren SXa, SXb und SXc mit X = 1 bis 7 besteht. Die Basisstationen NBX mit X = 1 bis 7 jeder Funkzelle 1-7 senden in die jeweiligen Funksektoren SXa, SXb und SXc über Sektorantennen, die einen Bereich von etwa 120 Grad abdecken.

Die Funksektoren SXa der Funkzellen 1-7 werden zu einer ersten Gruppe zusammengefasst. Weitere Gruppen bilden die Funksektoren SXb und die Funksektoren SXc. Die Funksektoren jeder dieser Gruppen weisen wechselseitig die geringsten Kopplungsfaktoren hinsichtlich der Funkübertragung auf.

Für die Übertragung von Informationen für Teilnehmerstationen in den Funkzellen 1-7, beispielsweise für ein paralleles Downloaden von Software, werden für den Fall, dass beispielsweise eine Informationsübertragung ohne zeitliche Überlappung gewünscht wird, zunächst die Informationen in die Funksektoren S1a, S2a und S3a, S4a, S5a, S6a und S7a übertragen. Nachdem der Download der ersten Gruppe (mit einem weißen Pfeil angedeutet) in den Funksektoren SXa abgeschlossen ist, werden die Informationen in den Funksektoren S1b, S2b, S3b, S4b, S5b, S6b und S7b (zweite Gruppe mit schwarzem Pfeil) übertragen. Schließlich werden die Informationen in den Sektoren S1c, S2c, S3c, S4c, S5c, S6c und S7c (dritte Gruppe mit schraffiertem Pfeil) übertragen.

Dieser Vorgang kann auch zyklisch wiederholt werden.

Anhand von Simulationen konnte für dieses Ausführungsbeispiel gezeigt werden, dass die Interferenzsituation innerhalb der Funkzellen durch die Erfindung wesentlich verbessert werden konnte. So hat sich beispielsweise ergeben, dass unter der Vorgabe von 20 Teilnehmerstationen in jeder Zelle für etwa 90% der Nutzer eine Verringerung der mittleren Interferenz für den regulären Verkehr durch die Erfindung im Bereich von etwa 7,5 dB resultiert. Dabei wirkt sich positiv aus, dass der reguläre Verkehr zusätzlich mit einer Leistungsregelung, nämlich mit einer Leistungsreduzierung, auf die auf Grund der Erfindung verringerte mittlere Interferenz reagiert. Dieser Effekt nimmt mit steigender Teilnehmerzahl pro Zelle zu.

Die Anzahl der zu wählenden n Funksektoren kann von verschiedenen Faktoren abhängig gemacht werden, beispielsweise von der durchschnittlichen Größe der zu übertragenden Informationen und/oder von Echtzeit-Anforderungen.

## Patentansprüche

1. Verfahren zur Übertragung von Informationen in einem zellularen Funkkommunikationssystem für mehrere Teilnehmerstationen,
wobei jede Funkzelle (1, 2, 3, 4, 5, 6, 7) des Funkkommunikationssystems eine Basisstation (NB1, NB2, NB3, NB4, NB5, NB6, NB7) umfasst,
über welche die Informationen über Rundruf und/oder Punkt-zu-Mehrpunkt-Verbindungen zu Teilnehmerstationen übertragen werden,
**dadurch gekennzeichnet,**
**dass** mindestens zwei Funkzellen (1, 2, 3, 4, 5, 6, 7) des zellularen Funkkommunikationssystems in jeweils n Funksektoren (SXa, SXb, SXc mit X = 1 bis 7) aufgeteilt sind, wobei n für die Anzahl der Funksektoren (SXa, SXb, SXc) mit einem Wert von mindestens zwei steht, und
**dass** in den jeweils n Funksektoren (SXa, SXb, SXc) einer Funkzelle (1, 2, 3, 4, 5, 6, 7) die Informationen zeitlich versetzt übertragen werden.

2. Verfahren nach Anspruch 1, **dadurch gekennzeichnet, dass** in den jeweils n Funksektoren (SXa, SXb, SXc) einer Funkzelle (1, 2, 3, 4, 5, 6, 7) die Informationen ohne zeitliche Überlappung, vorzugsweise in unmittelbar zusammenhängenden Zeitphasen, übertragen werden.

3. Verfahren nach Anspruch 1 oder 2, **dadurch gekennzeichnet, dass** die Funksektoren (SXa, SXb, SXc) der mindestens zwei Funkzellen (1, 2, 3, 4, 5, 6, 7) jeweils zu einer Gruppe (a, b, c) zusammengefasst werden, welche wechselseitig die geringsten Kopplungsfaktoren hinsichtlich der Funkübertragung aufweisen, und dass für jede Gruppe (a, b, c) die zeitlich differenzierte Übertragung der Informationen erfolgt.

4. Verfahren nach Anspruch 3, **dadurch gekennzeichnet, dass** die Gruppierung bezüglich der wechselseitig geringsten Kopplungsfaktoren zumindest in einem Bereich des Funkkommunikationsystems durchgeführt wird.

5. Verfahren nach einem der Ansprüche 3 oder 4, **dadurch gekennzeichnet, dass** die Gruppierung bezüglich der wechselseitig geringsten Kopplungsfaktoren im wesentlichen einer Gruppierung (a, b, c) nach der Ausrichtung der Sendesignale von den Basisstationen (NB1, NB2, NB3, NB4, NB5, NB6, NB7) zur Übertragung der Informationen entspricht.

6. Verfahren nach einem der Ansprüche 1 bis 5, **dadurch gekennzeichnet, dass** die Informationen Software, insbesondere für ein Downloaden eines Versionsabgleiches, umfassen.

7. Verfahren nach einem der Ansprüche 1 bis 6, **dadurch gekennzeichnet, dass** die Informationen Parameter für Anwendungen und/oder Dienste umfassen.

8. Verfahren nach einem der Ansprüche 1 bis 7, **dadurch gekennzeichnet, dass** als Anzahl der Funksektoren n=2, n=3 (SXa, SXb, SXc), n=4 oder n=6 gewählt wird.

9. Verfahren nach einem der Ansprüche 1 bis 8, **dadurch gekennzeichnet, dass** im Falle, dass die zu übertragende Informationen nicht komplett von einer Teilnehmerstation empfangen wurde, die Restinformationen über einen dezidierten Kanal zu dieser Teilnehmerstation übertragen werden.

10. Verfahren nach einem der Ansprüche 1 bis 9, **dadurch gekennzeichnet, dass** die Übertragung mittels eines CDMA-Vielfachzugriffsverfahrens erfolgt.

11. Zellulares Funkkommunikationssystem mit Mitteln zur Durchführung des Verfahrens nach einem der vorangehenden Ansprüche umfassend einen Netzwerk-Kontroller zur Steuerung der Übertragung der Informationen für mehrere Teilnehmerstationen.
